# EUROPEAN PATENT APPLICATION

(11) **EP 4 604 244 A1**
(43) Date of publication of application: **20.08.2025**
(21) Application number: 24862094.0
(22) Date of filing: 06.09.2024
(51) Int. Cl.: H01M 10/0525, H01M 4/131, H01M 4/136, H01M 10/0583, H01M 10/0587

(54) **BATTERY CELL AND LITHIUM ION BATTERY**

(30) Priority: 07.09.2023 CN 202322439260 U; 07.09.2023 CN 202322435913 U
(71) Applicant: Eve Power Co., Ltd., Jingmen, Hubei 448000 (CN)
(72) Inventor: CHEN, Meng, Jingmen, Hubei 448000 (CN); WU, Hao, Jingmen, Hubei 448000 (CN); ZHU, Jiaxin, Jingmen, Hubei 448000 (CN); LIU, Fanfen, Jingmen, Hubei 448000 (CN); YUAN, Dingding, Jingmen, Hubei 448000 (CN)
(74) Representative: Herrero & Asociados, S.L.
(86) International application number: PCT/CN2024/117518
(87) International publication number: WO 2025/051256

(57) **Abstract**

A cell includes a jellyroll A and a jellyroll B. The jellyroll A is formed by laminating a first positive-electrode sheet, a separator, a negative-electrode sheet, and another separator sequentially; the jellyroll B comprises a first portion of laminates and a second portion of laminates laminated on the first portion of laminates. The first portion of laminates is formed by laminating a first positive-electrode sheet, a separator, a negative-electrode sheet, and another separator sequentially; the second portion of laminates is formed by laminating a ternary positive- electrode sheet, a separator, a negative-electrode sheet, and another separator sequentially.

## Description

The present application claims the priority of the Chinese patent application No. 2023224392606, filed on September 7, 2023; and the Chinese patent application No. 2023224359133, filed on September 7, 2023, contents of which are incorporated herein by its entireties.

### TECHNICAL FIELD

Embodiments of the present disclosure relate to the technical field of lithium-ion batteries, and more specifically, to a cell and a lithium-ion battery.

### BACKGROUND

As the new energy technology develops, demands in the new energy market are increased to directly drive market demands for ternary lithium-ion batteries to be increased. A ternary lithium-ion battery, serving as an energy storage device having a high energy density and providing a high voltage, has been widely used in mobile and wireless electronic devices, power tools, hybrid and electric vehicles and other fields.

For the ternary lithium-ion battery, a positive electrode is formed by manganese, cobalt, and nickel, and manganese, cobalt, and nickel have different ratios of transition metal oxides. The nickel can affect an electric energy storage capacity of the battery. The manganese affects stability of the battery. The cobalt affects a charging-discharging rate of the battery. Moreover, materials of the positive electrode in the ternary lithium-ion battery further includes lithium iron phosphate, lithium cobaltate, lithium titanate, lithium manganate, and so on. Compared with ordinary materials of the positive electrode, advantages of all kinds of materials are fully integrated, stability of the positive electrode is improved. In the art, the ternary lithium-ion batteries can be applied stably, have a high energy density, and have a discharging rate, and a cost of the ternary lithium-ion battery is proper.

### SUMMARY

### TECHNICAL PROBLEM

Using a ternary lithium-ion battery in a new energy vehicle may cause fire accidents, being dangerous to surrounding people and the vehicle. Main causes for spontaneous combustion include extreme collision accidents or the battery being faulty. Nickel-cobalt-aluminium and nickel-cobalt-manganese materials have unstable structures at a high temperature, high-temperature safety is poor. In addition, a cell monomer may be bloating at a high pH value, leading to danger. A ternary cell arranged in the ternary lithium-ion battery is not safe and can be exploded and catch fire easily during pinprick, heating and thermal runaway tests. Furthermore, after the ternary lithium-ion battery is cyclically charged and discharged for thousands of times, attenuation in a battery capacity is high, and the battery capacity may be attenuated to reach 60% of a nominal battery capacity.

### TECHNICAL SOLUTIONS

In a first aspect, the present disclosure provides a cell, having following technical solutions.

A cell includes a jellyroll A and a jellyroll B. The jellyroll A is formed by laminating a first positive-electrode sheet, a separator, a negative-electrode sheet, and another separator sequentially; the jellyroll B comprises a first portion of laminates and a second portion of laminates laminated on the first portion of laminates. The first portion of laminates is formed by laminating a first positive-electrode sheet, a separator, a negative-electrode sheet, and another separator sequentially; the second portion of laminates is formed by laminating a ternary positive-electrode sheet, a separator, a negative-electrode sheet, and another separator sequentially.

The first positive-electrode sheet comprises a first active layer, the first active layer comprises a first active material, the first active material is any one of: lithium iron phosphate and lithium manganese iron phosphate.

In a second aspect, the present disclosure provides a cell, having following technical solutions.

A cell includes at least one jellyroll. The at least one jellyroll includes a plurality of first positive-electrode sheets, a plurality of negative-electrode sheets, a plurality of ternary positive-electrode sheets, and a plurality of separators.

Each of the plurality of first positive-electrode sheets is arranged with a first coating formed by a positive-electrode active material; a thickness of the first coating is in a range of 40 µm to 120 µm; the positive-electrode active material is any one of: lithium nickel cobalt manganate and lithium nickel cobalt aluminate.

Each of the plurality of ternary positive-electrode sheets is arranged with a ternary coating formed by a ternary active material; a thickness of the ternary coating is in a range of 30 µm to 100 µm.

A cell includes at least one jellyroll. The at least one jellyroll includes a plurality of first positive-electrode sheets, a plurality of negative-electrode sheets, a plurality of ternary positive-electrode sheets, and a plurality of separators.

Each of the plurality of first positive-electrode sheets is arranged with a first coating formed by a positive-electrode active material; a thickness of the first coating is in a range of 40 µm to 120 µm; the positive-electrode active material is any one of: lithium nickel cobalt manganate and lithium nickel cobalt aluminate.

Each of the plurality of ternary positive-electrode sheets is arranged with a ternary coating formed by a ternary active material; a thickness of the ternary coating is in a range of 30 µm to 100 µm.

In a third aspect, the present disclosure provides a lithium-ion battery, including the above cell.

In a fourth aspect, the present disclosure provides a lithium-ion battery, including a battery housing and the cell as described in the above arranged inside the battery housing. The number of the at least one jellyroll in the cell is two.

### TECHNICAL EFFECTS

1. The jellyroll A and the jellyroll B are both arranged. Firstly, in the jellyroll B, by arranging the first positive-electrode sheet and the ternary positive-electrode sheet B, heat is prevented from spreading in the cell, sensitivity of the nickel in the ternary material against the high content of moisture is reduced, such that safety of the cell is improved. Furthermore, by arranging the jellyroll A and the jellyroll B, the number of the ternary positive-electrode sheets in the cell is reduced, the extent of thermal runaway caused by the ternary positive-electrode sheets in the cell is reduced. Accordingly, the number of the first positive-electrode sheets is increased, further significantly alleviating and isolating the spreading of the heat between ternary electrode sheets, such that the service life and safety of the cell are improved.
2. The first positive-electrode sheet having lithium iron phosphate as the active substance or the first positive-electrode sheet having lithium manganese iron phosphate as the active substance layer is arranged together with the ternary positive-electrode sheet, and the thickness of the first coating and the thickness of the ternary coating are controlled. The first coating enables the first positive-electrode sheet to effectively isolate or reduce the spreading of the heat between the ternary positive-electrode sheets or across the cell, safety performance of the cell is improved, a probability of explosion in a pinprick test is reduced. Furthermore, controlling the thickness of the first coating and the thickness of the ternary coating can balance a migration rate of lithium ions at the positive-electrode sheet and a migration rate of lithium ions at a negative-electrode sheet, further improving the energy density and the cyclic service life of the lithium-ion battery.

### BRIEF DESCRIPTION OF THE DRAWINGS

FIG. 1 is a structural schematic view of a jellyroll A according to an embodiment 1 of the present disclosure.
FIG. 2 is a structural schematic view of a jellyroll B according to an embodiment 1 of the present disclosure.
FIG. 3 is a structural schematic view of one repetitive unit in a jellyroll of a cell according to an embodiment 2 of the present disclosure.
FIG. 4 is a structural schematic view of a first repetitive set and a second repetitive set in a jellyroll of a cell according to an embodiment 2 of the present disclosure.

Reference numerals in the drawings:
1, first positive-electrode sheet; 2, separator; 3, negative-electrode sheet; 4, ternary positive-electrode sheet; 5, first portion of the laminates; 6, second portion of the laminates; 11, first coating; 31, first graphite coating; 32, second graphite coating; and 41, ternary coating.

### DETAILED DESCRIPTIONS

In the description of the present disclosure, it is to be noted that terms "up", "down", "in", "rear", and so on, indicate an orientation or positional relationship as shown in the accompanying drawings only for the purpose of facilitating description of the present disclosure and simplifying the description. The terms do not indicate or imply that a device or an element must have a particular orientation or positional relationship. Therefore, the terms shall not be interpreted as limitation of the present disclosure. Furthermore, terms "first" and "second" are used for descriptive purposes only and shall not be interpreted as indicating or implying relative importance.

Unless otherwise defined, all technical and scientific terms used herein have same meanings as commonly understood by any ordinary skilled person in the art. Terms used herein in the specification of the present disclosure are used only for the purpose of describing specific embodiments and are not intended to limit the present disclosure. The term "and/or" is used herein to include any and all combinations of one or more of relevant listed items.

The present disclosure will be described in detail below by referring to the accompanying drawings and embodiments.

### Embodiment 1

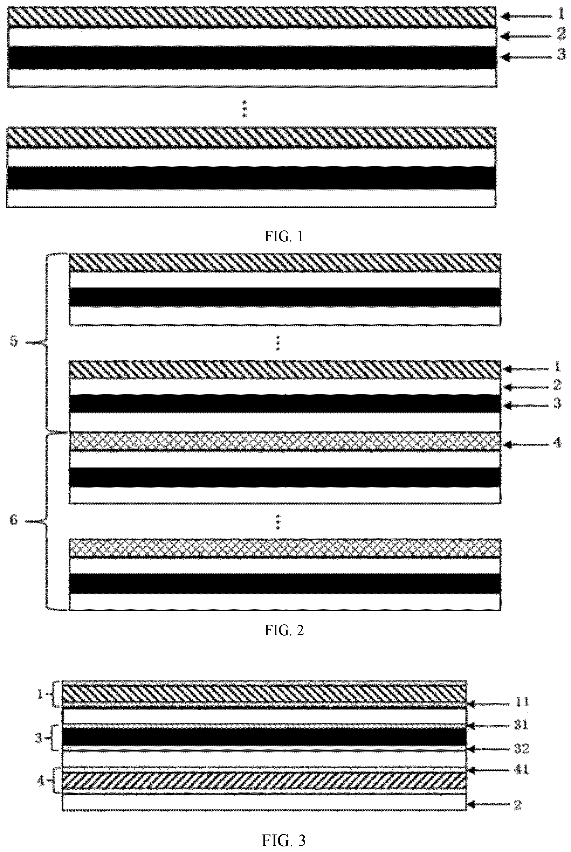

The embodiment 1 of the present disclosure provides a cell including a jellyroll A and a jellyroll B. As shown in FIGS. 1 and 2, the jellyroll A is formed by laminating a first positive-electrode sheet 1, a separator 2, a negative-electrode sheet 3, and another separator 2 sequentially. The first positive-electrode sheet 1 includes a first active layer. A thickness of the first active layer may be 40 µm, 80 µm, or 120 µm. The first active layer includes a first active material. A particle size D50 of the first active material may be 0.5 µm, 0.7 µm, or 1 µm. The first active material is any one of: lithium iron phosphate and lithium manganese iron phosphate, as long as the particle size of the first active material and the thickness of the first active layer can slow down the heat transfer among positive-electrode sheets 4. In the present embodiment, the thickness of the first active layer is 70 µm, the particle size D50 of the first active material is 0.8 µm, and the first active material is lithium manganese iron phosphate.

The jellyroll B includes a first portion of laminates 5 and a second portion of laminates 6 laminated on the first portion of laminates 5. The first portion of laminates 5 is formed by laminating a first positive-electrode sheet 1, a separator 2, a negative-electrode sheet 3, and another separator 2 sequentially. The second portion of laminates 6 is formed by laminating a ternary positive- electrode sheet 4, a separator 2, a negative-electrode sheet 3, and another separator 2 sequentially. The ternary positive-electrode sheet 4 of the jellyroll B includes a ternary active layer, and a thickness of the ternary active layer may be 30 µm, 60 µm, or 100 µm. The ternary active layer includes a ternary material, and a particle size D50 of the ternary material may be 3 µm, 3.5 µm, or 4 µm, as long as the particle size of the ternary material and the thickness of the ternary active layer do not affect the first positive-electrode sheet 1 in slowing down the heat transfer among the ternary positive-electrode sheets 4. In the present embodiment, the thickness of the ternary active layer is 60 µm, the particle size D50 of the ternary material is 3.5 µm, and the ternary material is lithium nickel cobalt manganate.

In the jellyroll B, a first negative-electrode active layer is arranged on a surface of the negative-electrode sheet 3 near the first positive-electrode sheet 1. A thickness of the first negative-electrode active layer may be 30 µm, 40 µm, or 60 µm. In the jellyroll B, a second negative-electrode active layer is arranged on a surface of the negative-electrode sheet 3 near the ternary positive-electrode sheet 4. A thickness of the second negative-electrode active layer may be 40 µm, 60 µm, or 70 µm. The thickness of the first negative-electrode active layer and the thickness of the second negative-electrode active layer need to enable a negative electrode and a positive electrode in the jellyroll B to be attenuated synchronously. In the present embodiment, the thickness of the first negative-electrode active layer is 35 µm, and the thickness of the second negative-electrode active layer is 55 µm. In the jellyroll B, a ratio of the number of first positive-electrode sheets 1 to the number of ternary positive-electrode sheets 4 may be 1:3, or 1:2, or 2:3, as long as the numbers enable slowing down the heat transfer while a high charging-discharging rate of the cell being maintained. In the present embodiment, the ratio of the number of first positive-electrode sheets 1 to the number of ternary positive-electrode sheets 4 in the jellyroll B is 1:2.

In addition, a ratio of the number of first positive-electrode sheets 1 in the jellyroll A to the number of first positive-electrode sheets 1 in the jellyroll B may be 1:3, 1:2, or 2:3, as long as the numbers enable the cell to have both excellent performance and the safety performance of the ternary cell. In the present embodiment, the ratio of the number of first positive-electrode sheets 1 in the jellyroll A to the number of first positive-electrode sheets in the jellyroll B is 1:3.

Accordingly, the present disclosure further provides a lithium-ion battery. The lithium-ion battery includes components included in a conventional lithium-ion battery, such as a housing, a jellyroll arranged inside the housing, and an electrolyte filled in the housing. A cell of the lithium-ion battery is the cell as described in the above embodiment. Other components, such as the housing and the electrolyte, may be conventional. Since the lithium-ion battery is arranged with the cell as described in the above embodiment, the lithium-ion battery is highly safe. In this way, application safety of the lithium-ion battery is improved.

### Implementation 1

The cell includes the jellyroll A and the jellyroll B. The jellyroll A is formed by laminating the first positive-electrode sheet 1, the separator 2, the negative-electrode sheet 3, and another separator 2 sequentially. The first positive-electrode sheet 1 includes the first active layer. The thickness of the first active layer may is 70 µm. The first active layer includes the first active material. The particle size D50 of the first active material is 0.8 µm. The first active material is lithium manganese iron phosphate.

The jellyroll B includes the first portion of laminates 5 and the second portion of laminates 6 laminated on the first portion of laminates 5. The first portion of laminates 5 is formed by laminating the first positive-electrode sheet 1, the separator 2, the negative-electrode sheet 3, and another separator 2 sequentially. The second portion of laminates 6 is formed by laminating the ternary positive- electrode sheet 4, the separator 2, the negative-electrode sheet 3, and another separator 2 sequentially. The ternary positive-electrode sheet 4 of the jellyroll B includes the ternary active layer, and the thickness of the ternary active layer 60µm. The ternary active layer includes the ternary material, and the particle size D50 of the ternary material is 3.5 µm. The ternary material is lithium nickel cobalt manganate. In the jellyroll B, the first negative-electrode active layer is arranged on the surface of the negative-electrode sheet 3 near the first positive-electrode sheet 1, the thickness of the first negative-electrode active layer is 35 µm. In the jellyroll B, the second negative-electrode active layer is arranged on the surface of the negative-electrode sheet 3 near the ternary positive-electrode sheet 4, and the thickness of the second negative-electrode active layer is 55 µm. In the jellyroll B, the ratio of the number of first positive-electrode sheets 1 to the number of ternary positive-electrode sheets 4 is 1:2. The ratio of the number of first positive-electrode sheets 1 in the jellyroll A to the number of ternary positive-electrode sheets 4 in the jellyroll B is 1:3.

### Implementation 2

The cell includes the jellyroll A and the jellyroll B, and the jellyroll A is disposed above the jellyroll B. The jellyroll A is formed by laminating the first positive-electrode sheet 1, the separator 2, the negative-electrode sheet 3, and another separator 2 sequentially. The first positive-electrode sheet 1 includes the first active layer. The thickness of the first active layer may is 40 µm. The first active layer includes the first active material. The particle size D50 of the first active material is 0.5 µm. The first active material is lithium iron phosphate.

The jellyroll B includes the first portion of laminates 5 and the second portion of laminates 6 laminated on the first portion of laminates 5. The first portion of laminates 5 is formed by laminating the first positive-electrode sheet 1, the separator 2, the negative-electrode sheet 3, and another separator 2 sequentially. The second portion of laminates 6 is formed by laminating the ternary positive- electrode sheet 4, the separator 2, the negative-electrode sheet 3, and another separator 2 sequentially. The ternary positive-electrode sheet 4 of the jellyroll B includes the ternary active layer, and the thickness of the ternary active layer 30µm. The ternary active layer includes the ternary material, and the particle size D50 of the ternary material is 3µm. The ternary material is lithium nickel cobalt manganate. In the jellyroll B, the first negative-electrode active layer is arranged on the surface of the negative-electrode sheet 3 near the first positive-electrode sheet 1, the thickness of the first negative-electrode active layer is 32 µm. In the jellyroll B, the second negative-electrode active layer is arranged on the surface of the negative-electrode sheet 3 near the ternary positive-electrode sheet 4, and the thickness of the second negative-electrode active layer is 45 µm. In the jellyroll B, the ratio of the number of first positive-electrode sheets 1 to the number of ternary positive-electrode sheets 4 is 1:3. The ratio of the number of first positive-electrode sheets 1 in the jellyroll A to the number of ternary positive-electrode sheets 4 in the jellyroll B is 2:3.

### Implementation 3

The cell includes the jellyroll A and the jellyroll B, and the jellyroll A is disposed above the jellyroll B. The jellyroll A is formed by laminating the first positive-electrode sheet 1, the separator 2, the negative-electrode sheet 3, and another separator 2 sequentially. The first positive-electrode sheet 1 includes the first active layer. The thickness of the first active layer may is 120 µm. The first active layer includes the first active material. The particle size D50 of the first active material is 1 µm. The first active material is lithium manganese iron phosphate.

The jellyroll B includes the first portion of laminates 5 and the second portion of laminates 6 laminated on the first portion of laminates 5. The first portion of laminates 5 is formed by laminating the first positive-electrode sheet 1, the separator 2, the negative-electrode sheet 3, and another separator 2 sequentially. The second portion of laminates 6 is formed by laminating the ternary positive- electrode sheet 4, the separator 2, the negative-electrode sheet 3, and another separator 2 sequentially. The ternary positive-electrode sheet 4 of the jellyroll B includes the ternary active layer, and the thickness of the ternary active layer 100µm. The ternary active layer includes the ternary material, and the particle size D50 of the ternary material is 3.9µm. The ternary material is lithium nickel cobalt manganate. In the jellyroll B, the first negative-electrode active layer is arranged on the surface of the negative-electrode sheet 3 near the first positive-electrode sheet 1, the thickness of the first negative-electrode active layer is 55 µm. In the jellyroll B, the second negative-electrode active layer is arranged on the surface of the negative-electrode sheet 3 near the ternary positive-electrode sheet 4, and the thickness of the second negative-electrode active layer is 70 µm. In the jellyroll B, the ratio of the number of first positive-electrode sheets 1 to the number of ternary positive-electrode sheets 4 is 2:3. The ratio of the number of first positive-electrode sheets 1 in the jellyroll A to the number of ternary positive-electrode sheets 4 in the jellyroll B is 1:2.

Pinprick safety tests are performed on ternary lithium-ion batteries obtained from the above implementations 1-3 and a conventional ternary lithium-ion battery in the art. The only difference between the ternary lithium-ion batteries obtained from the above implementations 1-3 and the conventional ternary lithium-ion battery in the art is the cell, all other components are identical. Results of the pinprick safety tests and cycling performance tests are shown in Table 1.

**Table 1**

| Serial number | Pass rate of pinprick tests/% | Pass rate of weight punch/% | Cyclic service life /number of times |
|---|---|---|---|
| Implementation 1 | 91 | 86 | 3150 |
| Implementation 2 | 89 | 84 | 3000 |
| Implementation 3 | 88 | 82 | 3005 |
| conventional ternary lithium-ion battery | 51 | 48 | 2020 |

As can be seen from Table 1, the jellyroll in the present disclosure significantly improves the safety performance and the cyclic service life of the lithium-ion battery. By arranging the jellyroll A and the jellyroll B, the first positive-electrode sheet 1 significantly reduces a rate of releasing heat generated by the ternary positive-electrode sheet 4 in the pinprick tests, localized high temperatures are prevented in the jellyroll. Sensitivity of a high content of nickel in the ternary material against moisture is reduced, safety of the cell is significantly improved. By arranging the first negative-electrode active layer and the second negative-electrode active layer on the surfaces of the negative-electrode sheet 3 respectively corresponding to the first active layer and the ternary active layer, the positive-electrode sheet and the negative-electrode sheet in the lithium-ion battery are attenuated synchronously, further improving the cyclic service life of the cell.

### Embodiment 2

### Implementation 4

The present embodiment provides a cell including at least one jellyroll. The number of the at least one jellyroll may be one, three, or five. In the present disclosure, the number of the at least one jellyroll is two. As shown in FIG. 3, one of the two jellyrolls includes a plurality of repetitive units that are sequentially laminated. The number of the plurality of repetitive units may be two, ten, or thirty, as long as the number enables the cell to operate normally in the lithium-ion battery. In the present embodiment, the number of the plurality of repetitive units is eight. In one of the plurality of repetitive units, the first positive-electrode sheet 1, the separator 2, the negative-electrode sheet 3, the separator 2, the ternary positive-electrode sheet 4, the separator 2, the negative-electrode sheet 3, and the separator 2 are sequentially laminated. The separator 2 in the jellyroll may be a polyethylene separator or a polypropylene separator, and in the present embodiment, the separator 2 is the polyethylene separator.

The positive-electrode active material used in the first positive-electrode sheet 1 may be lithium iron phosphate or lithium manganese iron phosphate. In the present embodiment, the positive-electrode active material is lithium manganese iron phosphate. The first positive-electrode sheet 1 is arranged with a first coating 11 formed by a lithium manganese iron phosphate slurry. A thickness of the first coating 11 may be 40 µm, can be 80 µm, or 120 µm. The positive-electrode active material used in the ternary positive-electrode sheet 4 may be lithium nickel cobalt manganate or lithium nickel cobalt aluminate. In the present embodiment, the active material on the surface of the ternary positive-electrode sheet 4 is lithium nickel cobalt manganate. The ternary positive-electrode sheet 4 is arranged with a ternary coating 41 formed by a lithium nickel cobalt manganate slurry. A thickness of the ternary coating 41 may be 30 µm, 60 µm, or 100 µm. A positive electrode collector arranged in each of the first positive-electrode sheet 1 and the ternary positive-electrode sheet 4 is a carbon-coated aluminum foil. By controlling the thickness of the first coating 11 and the thickness of the ternary coating 41, heat spreading between ternary positive-electrode sheets 4 can be effectively reduced or even completely prevented, such that the safety of the lithium-ion battery and the cyclic service life of the lithium-ion battery are improved.

As shown in FIG. 3, a first graphite coating 31, formed by a graphite slurry, is arranged on a surface of the negative-electrode sheet 3 near the first positive-electrode sheet 1. A thickness of the first graphite coating 31 may be 40 µm, 60 µm, or 80 µm. A second graphite coating 32, formed by the graphite slurry, is arranged on a surface of the negative-electrode sheet 3 near the ternary positive-electrode sheet 4. A thickness of the second graphite coating 32 may be 50 µm, 70 µm, 100 µm. The first positive-electrode sheet 1 corresponds to the first graphite coating 31 on the negative-electrode sheet 3, and the ternary positive-electrode sheet 4 corresponds to the second graphite coating 32 on the negative-electrode sheet 3, and in this way, the cyclic service life of the lithium-ion battery is further improved.

Accordingly, the present disclosure further provides a lithium-ion battery. The lithium-ion battery includes components contained in any conventional lithium-ion battery, such as a housing, a jellyroll arranged inside the housing, and an electrolyte filled in the housing. The jellyroll of the lithium-ion battery is the jellyroll as described in the above embodiments. Other components, such as the housing and the electrolyte, may be conventional components in the art. Since the lithium-ion battery is arranged with the jellyroll in the above embodiments, safety performance of the lithium-ion battery is improved, and safety of application of the lithium-ion battery is improved.

### Implementation 5

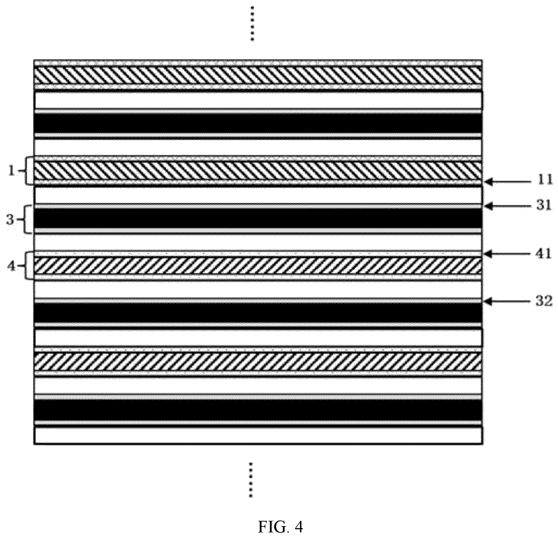

As shown in FIG. 4, a cell is provided, and a laminating structure of the first positive-electrode sheet 1, the separator 2, the negative-electrode sheet 3, and the ternary positive-electrode sheet 4 in the jellyroll is different from that of the implementation 4. In the present embodiment, one jellyroll includes a first repetitive set and a second repetitive set laminated on the first repetitive set. The first repetitive set is formed by laminating the first positive-electrode sheet 1, the separator 2, the negative-electrode sheet 3, and the separator 2 sequentially. The second repetitive set is formed by laminating the ternary positive-electrode sheet 4, the separator 2, the negative-electrode sheet 3, and the separator 2 sequentially. The number of first positive-electrode sheets 1 in the first repetitive set may be one, or ten, or twenty, as long as the number of first positive-electrode sheets 1 and the number of the ternary positive-electrode sheets 4 can improve the safety of the ternary cell. In the present embodiment, the number of first positive-electrode sheets 1 is the same as the number of ternary positive-electrode sheets 4, and the number of the first positive-electrode sheets 1 is ten, the number of the ternary positive-electrode sheets 4 is ten.

Accordingly, the present embodiment further provides a lithium-ion battery. The lithium-ion battery includes components contained in any conventional lithium-ion battery, such as a housing, a jellyroll arranged inside the housing, and an electrolyte filled in the housing. The jellyroll of the lithium-ion battery is the jellyroll as described in the above embodiments. Other components, such as the housing and the electrolyte, may be conventional components in the art. Since the lithium-ion battery is arranged with the jellyroll in the above embodiments, safety performance of the lithium-ion battery is improved, and safety of application of the lithium-ion battery is improved.

In an implementation 6, a cell includes two jellyrolls having a same structure. One of the two jellyrolls includes ten repetitive units laminated sequentially. In one of the ten repetitive units, the first positive-electrode sheet 1, the separator 2, the negative-electrode sheet 3, the separator 2, the ternary positive-electrode sheet 4, the separator 2, the negative-electrode sheet 3, and the separator 2 are laminated sequentially. The positive electrode collector arranged in each of the first positive-electrode sheet 1 and the ternary positive-electrode sheet 4 is the graphite-coated aluminum foil, and the separator 2 is the polyethylene separator.

The positive-electrode active material used in the first positive-electrode sheet 1 is lithium manganese iron phosphate. The thickness of the first coating 11, formed by a lithium manganese iron phosphate slurry, on the first positive-electrode sheet 1 is 80 µm. The positive-electrode active material used in the ternary positive-electrode sheet 4 is lithium nickel cobalt manganate. The thickness of the ternary coating 41, formed by a lithium nickel cobalt manganate slurry, on the ternary positive-electrode sheet 4 is 60 µm. The first graphite coating 31, formed by a graphite slurry and having a thickness of 60 µm, is arranged on the surface of the negative-electrode sheet 3 near the first positive-electrode sheet 1. The second graphite coating 32, formed by the graphite slurry and having a thickness of 70 µm, is arranged on the surface of the negative-electrode sheet 3 near the ternary positive-electrode sheet 4.

A lithium-ion battery includes a housing, two jellyrolls as described in the above disposed inside the housing, and an electrolyte filled in the housing.

### Implementation 7

The cell includes two jellyrolls having a same structure. One of the two jellyrolls includes five repetitive units laminated sequentially. In one of the five repetitive units, the first positive-electrode sheet 1, the separator 2, the negative-electrode sheet 3, the separator 2, the ternary positive-electrode sheet 4, the separator 2, the negative-electrode sheet 3, and the separator 2 are laminated sequentially. The positive electrode collector arranged in each of the first positive-electrode sheet 1 and the ternary positive-electrode sheet 4 is the graphite-coated aluminum foil, and the separator 2 is the polypropylene separator.

The positive-electrode active material used in the first positive-electrode sheet 1 is lithium manganese iron phosphate. The thickness of the first coating 11, formed by the lithium manganese iron phosphate slurry, on the first positive-electrode sheet 1 is 40 µm. The positive-electrode active material used in the ternary positive-electrode sheet 4 is lithium nickel cobalt manganate. The thickness of the ternary coating 41, formed by the lithium nickel cobalt manganate slurry, on the ternary positive-electrode sheet 4 is 30 µm. The first graphite coating 31, formed by the graphite slurry and having the thickness of 40 µm, is arranged on the surface of the negative-electrode sheet 3 near the first positive-electrode sheet 1. The second graphite coating 32, formed by the graphite slurry and having the thickness of 50 µm, is arranged on the surface of the negative-electrode sheet 3 near the ternary positive-electrode sheet 4.

A lithium-ion battery includes a housing, two jellyrolls as described in the above disposed inside the housing, and an electrolyte filled in the housing.

### Implementation 8

The cell includes two jellyrolls having a same structure. One of the two jellyrolls includes twenty repetitive units laminated sequentially. In one of the twenty repetitive units, the first positive-electrode sheet 1, the separator 2, the negative-electrode sheet 3, the separator 2, the ternary positive-electrode sheet 4, the separator 2, the negative-electrode sheet 3, and the separator 2 are laminated sequentially. The positive electrode collector arranged in each of the first positive-electrode sheet 1 and the ternary positive-electrode sheet 4 is the graphite-coated aluminum foil, and the separator 2 is the polyethylene separator.

The positive-electrode active material used in the first positive-electrode sheet 1 is lithium manganese iron phosphate. The thickness of the first coating 11, formed by the lithium manganese iron phosphate slurry, on the first positive-electrode sheet 1 is 120 µm. The positive-electrode active material used in the ternary positive-electrode sheet 4 is lithium nickel cobalt manganate. The thickness of the ternary coating 41, formed by the lithium nickel cobalt manganate slurry, on the ternary positive-electrode sheet 4 is 100 µm. The first graphite coating, formed by the graphite slurry and having the thickness of 80 µm, is arranged on the surface of the negative-electrode sheet 3 near the first positive-electrode sheet 1. The second graphite coating 32, formed by the graphite slurry and having the thickness of 100 µm, is arranged on the surface of the negative-electrode sheet 3 near the ternary positive-electrode sheet 4.

A lithium-ion battery includes a housing, two jellyrolls as described in the above disposed inside the housing, and an electrolyte filled in the housing.

### Implementation 9

Being different from the implementation 6, in the implementation 9, one jellyroll includes the first repetitive set and the second repetitive set laminated on the first repetitive set. The first repetitive set is formed by laminating the first positive-electrode sheet 1, the separator 2, the negative-electrode sheet 3, and the separator 2 sequentially. The second repetitive set is formed by laminating the ternary positive-electrode sheet 4, the separator 2, the negative-electrode sheet 3, and the separator 2 sequentially. The number of first positive-electrode sheets 1 in the first repetitive set is equal to the number of ternary positive-electrode sheets 4 in the second repetitive set, both of which are ten. The rest components of the cell in the present implementation are consistent with those in the implementation 6.

Pinprick safety tests are performed on ternary lithium-ion batteries obtained from the above implementations 6-9 and a conventional ternary lithium-ion battery in the art. The only difference between the ternary lithium-ion batteries obtained from the above implementations 6-9 and the conventional ternary lithium-ion battery in the art is the cell, all other components are identical. Results of the pinprick safety tests are shown in Table 2.

**Table 2**

| Implementations | Pass rate of the pinprick safety tests (%) |
|---|---|
| Implementation 6 | 86% |
| Implementation 7 | 90% |
| Implementation 8 | 89% |
| Implementation 9 | 88% |
| Commercial battery in the art | 50% |

As can be seen from Table 2, by arranging the jellyroll in the present disclosure, the safety performance of the lithium-ion battery is significantly improved. This is because, the thicknesses of the first coating 11 and the thickens of the ternary coating 41 are controlled, such that the first positive-electrode sheet 1 significantly reduces a rate of releasing heat generated by the ternary positive-electrode sheet 4 in the pinprick tests, preventing localized high temperatures in the jellyroll. Therefore, the safety performance of the cell is significantly improved. By arranging the first graphite coating 31 and the second graphite coating 32, which have thicknesses corresponding to the first coating 11 and the ternary coating 41, on surfaces of the negative-electrode sheet 3, a transmission efficiency and transfer balance of lithium ions between the negative-electrode sheet 3 and different positive-electrode sheets are further improved, such that the safety and the cyclic service life of the cell are further improved.

## Claims

1. A cell, comprising a jellyroll A and a jellyroll B, wherein,
the jellyroll A is formed by laminating a first positive-electrode sheet, a separator, a negative-electrode sheet, and another separator sequentially; the jellyroll B comprises a first portion of laminates and a second portion of laminates laminated on the first portion of laminates;
the first portion of laminates is formed by laminating a first positive-electrode sheet, a separator, a negative-electrode sheet, and another separator sequentially; the second portion of laminates is formed by laminating a ternary positive-electrode sheet, a separator, a negative-electrode sheet, and another separator sequentially;
the first positive-electrode sheet comprises a first active layer, the first active layer comprises a first active material, the first active material is any one of: lithium iron phosphate and lithium manganese iron phosphate.

2. A method of preparing the cell according to claim 1, wherein, a thickness of the first active layer is in a range of 40 µm to 120 µm.

3. The cell according to claim 1 or 2, wherein a particle size D50 of the first active material is in a range of 0.5 µm to 1µm.

4. A method of preparing the cell according to claim 1, wherein the ternary positive-electrode sheet comprises a ternary active layer, and a thickness of the ternary active layer is in a range of 30 µm to 100 µm.

5. The cell according to claim 4, wherein the ternary active layer comprises a ternary material, and a particle size D50 of the ternary material is in a range of 3 µm to 4 µm.

6. The cell according to claim 1, wherein in the jellyroll B, a first negative-electrode active layer is arranged on a surface of the negative-electrode sheet near the first positive-electrode sheet, a thickness of the first negative-electrode active layer is in a range of 30 µm to 60 µm; and a second negative-electrode active layer is arranged on a surface of the negative-electrode sheet near the ternary positive-electrode sheet, and a thickness of the second negative-electrode active layer is in a range of 40 µm to 70 µm.

7. The cell according to claim 1, wherein in the jellyroll B, a ratio of the number of first positive-electrode sheets to the number of ternary positive-electrode sheets is in a range of 1:3 to 2:3.

8. The cell according to claim 7, wherein in the jellyroll B, the ratio of the number of first positive-electrode sheets to the number of ternary positive-electrode sheets is in a range of 1:2.

9. The cell according to claim 1, wherein a ratio of the number of first positive-electrode sheets in the jellyroll A to the number of first positive-electrode sheets in the jellyroll B is in a range of 1:3 to 2:3.

10. A lithium-ion battery, comprising the cell according to any one of claims 1 to 9.

11. A cell, comprising at least one jellyroll, wherein the at least one jellyroll comprises a plurality of first positive-electrode sheets, a plurality of negative-electrode sheets, a plurality of ternary positive-electrode sheets, and a plurality of separators;
each of the plurality of first positive-electrode sheets is arranged with a first coating formed by a positive-electrode active material; a thickness of the first coating is in a range of 40 µm to 120 µm; the positive-electrode active material is any one of: lithium nickel cobalt manganate and lithium nickel cobalt aluminate;
each of the plurality of ternary positive-electrode sheets is arranged with a ternary coating formed by a ternary active material; a thickness of the ternary coating is in a range of 30 µm to 100 µm.

12. The cell according to claim 11, wherein one of the at least one jellyroll comprises a plurality of repetitive units that are sequentially laminated; and
one of the plurality of repetitive units comprises a respective one of the plurality of first positive-electrode sheets, a respective one of the plurality of separators, a respective one of the plurality of negative-electrode sheets, another respective one of the plurality of separators, a respective one of the plurality of ternary positive-electrode sheets, another respective one of the plurality of separators, another respective one of the plurality of negative-electrode sheets, and another respective one of the plurality of separators are sequentially laminated.

13. The cell according to claim 12, wherein the number of the plurality of repetitive units in one of the at least one jellyroll is 2 to 30.

14. The cell according to claim 11, wherein one of the at least one jellyroll comprises a first repetitive set and a second repetitive set laminated on the first repetitive set;
the first repetitive set is formed by laminating a respective one of the plurality of first positive-electrode sheets, a respective one of the plurality of separators, a respective one of the plurality of negative-electrode sheets, and another respective one of the plurality of separators sequentially; the second repetitive set is formed by laminating a respective one of the plurality of ternary positive-electrode sheets, a respective one of the plurality of separators, a respective one of the plurality of negative-electrode sheets, and another respective one of the plurality of separators sequentially.

15. The cell according to claim 14, wherein the number of first positive-electrode sheets in the first repetitive set is equal to the number of ternary positive-electrode sheets in the second repetitive set.

16. The cell according to any one of claims 11 to 15, wherein, for each of the plurality of negative-electrode sheets, a first graphite coating is arranged on a surface of the negative-electrode sheet near a respective one of the plurality of first positive-electrode sheets.

17. The cell according to claim 16, a thickness of the first graphite coating is in a range of 40 µm to 80 µm.

18. The cell according to claim 16, wherein, for each of the plurality of negative-electrode sheets, a second graphite coating is arranged on a surface of the negative-electrode sheet near a respective one of the plurality of ternary positive-electrode sheets.

19. The cell according to claim 18, wherein a thickness of the second graphite coating is in a range of 50 µm to 100 µm.

20. A lithium-ion battery, comprising a battery housing and the cell according to any one of claims 11 to 19 arranged inside the battery housing, wherein the number of the at least one jellyroll in the cell is two.
